# EUROPÄISCHE PATENTSCHRIFT

(11) **EP 3 771 841 B1**
(45) Veröffentlichungstag und Bekanntmachung des Hinweises auf die Patenterteilung: **30.08.2023**
(21) Anmeldenummer: 20185481.7
(22) Anmeldetag: 13.07.2020
(51) Int. Cl.: F16C 11/06, F16C 11/08

(54) **LAGERSCHALE FÜR EIN KUGELGELENK SOWIE KUGELGELENK**
BALL JOINT AND BEARING FOR A BALL JOINT
COUSSINET DE PALIER POUR UNE ARTICULATION À ROTULE AINSI QU'ARTICULATION À ROTULE

(30) Priorität: 31.07.2019 DE 202019104213 U
(43) Veröffentlichungstag der Anmeldung: 03.02.2021
(73) Patentinhaber: THK Rhythm Automotive GmbH, 40233 Düsseldorf (DE)
(72) Erfinder: Vetten, Daniel, 40233 Düsseldorf (DE); Paul, Alexander, 40233 Düsseldorf (DE); Phiaphakdy-Nguyen, Vat, 40233 Düsseldorf (DE); Selvan Rajagopal, Tamil, 40233 Düsseldorf (DE)
(74) Vertreter: Prinz & Partner mbB

(56) Entgegenhaltungen:
- EP-A1- 0 082 638
- DE-A1- 2 443 089
- DE-A1-102010 005 134
- US-A- 3 560 035
- US-A- 3 953 139
- US-B1- 6 302 615
- US-B2- 8 151 464

## Beschreibung

Die Erfindung betrifft eine Lagerschale für ein Kugelgelenk mit einer im Wesentlichen kreiszylindermantelförmigen Seitenwand, die entlang einer Längsachse verläuft, und einer in einem axialen Endbereich der Seitenwand innerhalb der Seitenwand angeordneten kugelschalenabschnittsförmigen Stirnwand. In einem axialen Scheitelbereich der Stirnwand ist dabei eine Öffnung vorgesehen.

Ferner betrifft die Erfindung ein Kugelgelenk mit einer solchen Lagerschale. Derartige Lagerschalen und damit ausgestattete Kugelgelenke sind aus dem Stand der Technik bekannt. Beispielsweise zeigen die DE 10 2010 005 134 A1, US 6 302 615 B1, DE 24 43 089 A1, US 3 560 035 A, US 3 953 139 A, US 8 151 464 B2 und die EP 0 082 638 A1 Lagerschalen der eingangs genannten Art. US 8 151 464 B2 offenbart eine Lagerschale gemäß dem Oberbegriff des Anspruchs 1.

Sie werden insbesondere in Kraftfahrzeugen eingesetzt. In diesem Zusammenhang ist es üblich, Kugelgelenke in Axialrichtung, d.h. in Richtung einer Längsachse des zugeordneten Kugelzapfens vorzuspannen. Auf diese Weise wird innerhalb des Kugelgelenks, z. B. an der Lagerschale, auftretender Verschleiß kompensiert, sodass das Kugelgelenk trotz Verschleiß im Wesentlichen über seine gesamte Lebensdauer spielfrei arbeitet.

Es ist vor diesem Hintergrund die Aufgabe der Erfindung, ein verbessertes Kugelgelenk mit einer verbesserten Lagerschale anzugeben. Dabei sollen sowohl das Kugelgelenk als auch die Lagerschale einfach aufgebaut und kostengünstig herstellbar sein. Selbstverständlich darf das nicht auf Kosten der Spielfreiheit und der Verschleißkompensation erfolgen.

Die Aufgabe wird durch eine Lagerschale der eingangs genannten Art gelöst, bei der am Rand der Öffnung ein im Wesentlichen in Axialrichtung nach außen abstehender Bund angeformt ist. Dabei sind die Stirnwand und/oder der Bund als elastisch verformbare Feder ausgebildet. Ein solcher Bund hat zwei Funktionen. Einerseits dient er als Überlastschutz, der verhindert, dass ein über die Lagerschale gelagerter Kugelkopf im Überlastfall an einen zugeordneten Gehäusedeckel eines Kugelgelenks anstößt. Darüber hinaus wirkt der Bund als Abstandshalter, über den die Lagerschale bei auftretendem Verschleiß an einem Gehäusedeckel angelegt werden kann. Über einen solchen Bund ist folglich eine einfache und zuverlässige Positionierung der Lagerschale möglich, sodass ein möglicherweise an der Lagerschale auftretender Verschleiß ebenso einfach und zuverlässig kompensiert werden kann. Der Bund kann vollständig am Umfang der Öffnung umlaufen oder segmentiert sein. In diesem Zusammenhang ist jedoch ein vollständiges Umlaufen bevorzugt, da so der Überlastschutz und die Abstandshalterfunktion besonders gleichmäßig ausgeführt werden können. Da die Stirnwand und/oder der Bund als elastisch verformbare Feder ausgebildet ist bzw. sind, kann durch eine definierte Komprimierung des Bundes und/oder der Stirnwand eine definierte Kraft in ein die Lagerschale umfassendes Kugelgelenk eingebracht werden. Auf diese Weise lässt sich trotz Verschleiß ein zuverlässiger Betrieb des die Lagerschale umfassenden Kugelgelenks realisieren. Zudem wird so ein wirkungsvoller Überlastschutz gewährleistet.

Die Seitenwand weist dabei in demjenigen axialen Endbereich, in dem die Stirnwand vorgesehen ist, an ihrer axialen Stirnseite eine umfangsmäßig umlaufende Nut auf. Eine solche Nut dient dem Ausgleich axialer Toleranzen. In diesem Zusammenhang kann Material aus den die Nut begrenzenden Abschnitten der Lagerschale in die Nut hineinfließen. Damit ist die Lagerschale auf einfache, präzise und zuverlässige Weise mit den ergänzenden Elementen eines Kugelgelenks verbindbar.

Für den Fall, dass die Lagerschale mit kunststofftechnischen Herstellungsverfahren produziert wird, ist dies insbesondere dadurch besonders einfach, dass der Rand sich in der Axialrichtung erstreckt. Damit werden mit Bezug auf eine Entformungsrichtung Hinterschnitte vermieden.

In einer Ausführungsform ist ein axiales Ende des Bundes gegenüber einem zugeordneten axialen Ende der Seitenwand in Axialrichtung zurückversetzt. Mit anderen Worten steht die Seitenwand in Axialrichtung gegenüber dem Bund vor. Dadurch ist der Bund vor unerwünschten Belastungen geschützt, die im Betrieb der Lagerschale zu unerwünschten Kontakten zwischen dem Bund und einem Gehäusedeckel führen könnten.

Zudem kann die Seitenwand in demjenigen axialen Endbereich, in dem die Stirnwand vorgesehen ist, eine Wandverdickung aufweisen, insbesondere wobei die Wandverdickung am Umfang der Seitenwand vollständig umläuft. Dabei kann die Wand beispielsweise auf ca. 150 % ihrer sonstigen Wanddicke verdickt sein. Insbesondere ist die Wandverdickung an einem axialen Ende der Seitenwand vorgesehen. Über eine derartige Wandverdickung kann die Lagerschale einfach, präzise und zuverlässig in einem zugeordneten Gelenkgehäuse gelagert werden. Es wird ferner eine einfache Montierbarkeit sichergestellt.

Gemäß einer Variante ist vorgesehen, dass eine axiale Länge eines gegenüber der Stirnwand in Axialrichtung vorstehenden Bereichs des Bundes mindestens 50% einer Wandstärke der Stirnwand beträgt, insbesondere mindestens 80% einer Wandstärke der Stirnwand beträgt, vorzugsweise mindestens 100% einer Wandstärke der Stirnwand beträgt. Die axiale Länge des Bundes ist somit im Vergleich zur Wandstärke der Stirnwand nicht vernachlässigbar. Aufgrund dieser Länge ist eine Kopplung des Bundes mit einem eine Vorspannungskraft aufbringenden Element einfach herstellbar. Dadurch gewährleistet die Lagerschale eine zuverlässige Verschleißnachstellung.

Bevorzugt ist die Lagerschale aus einem Kunststoffmaterial hergestellt, insbesondere aus einem elastischen Kunststoffmaterial. Die Lagerschale lässt sich dadurch mit standardmäßigen Maschinen und Anlagen herstellen. Insbesondere, wenn die Lagerschale in hohen Stückzahlen produziert werden soll, ist ihre Herstellung aus Kunststoffmaterial besonders wirtschaftlich. Darüber hinaus lassen sich die elastischen Eigenschaften von Kunststoffmaterial besonders einfach an einen spezifischen Anwendungsfall anpassen. Somit kann bei einer Lagerschale aus Kunststoffmaterial die Verschleißkompensation leicht und präzise eingestellt werden.

Die Lagerschale kann einstückig sein. Es entfallen somit jegliche Montageaktivitäten hinsichtlich der Lagerschale. Ferner kann die Lagerschale somit leicht im Gewicht sein.

Gemäß einer Variante weist der Bund zumindest einen im Wesentlichen in Axialrichtung verlaufenden Schlitz auf. Das bedeutet, dass der Bund an seinem Umfang durch den zumindest einen Schlitz unterbrochen ist. Dabei wird die Anzahl der Schlitze in Abhängigkeit der Größe der Lagerschale und in Abhängigkeit des spezifischen Anwendungsfalls gewählt. Die Schlitze können gleichmäßig am Umfang des Bundes verteilt sein. Mittels derartiger Schlitze lassen sich die elastischen Eigenschaften des Bundes mit hoher Präzision einstellen.

Bevorzugt durchläuft der Schlitz den Bund in Axialrichtung und erstreckt sich bis in die Stirnwand. Es lassen sich somit mittels des Schlitzes auch die elastischen Eigenschaften der Stirnwand einstellen.

Ein der Stirnwand abgewandtes axiales Ende der Seitenwand kann radial außen angefast sein. Mit anderen Worten weist eine Außenkante dieses axialen Endes eine Fase auf. Die Außenkante ist also gebrochen. Auf diese Weise wird die Montierbarkeit der Lagerschale erleichtert.

In einer Alternative verläuft eine Außenmantelfläche eines der Stirnwand abgewandten axialen Endbereichs der Seitenwand kegelmantelförmig nach radial innen, insbesondere verläuft sie mit einem Kegelwinkel von 0,5 bis 2° geneigt. Im weitesten Sinne ist somit der axiale Endbereich kegelig angespitzt. Es wird somit die Montage der Lagerschale erleichtert, in deren Rahmen die Lagerschale häufig mit dem der Stirnwand abgewandten Endbereich voran in eine Öffnung eingeführt werden muss.

Alternativ oder zusätzlich verläuft eine Innenmantelfläche eines der Stirnwand abgewandten axialen Endbereichs der Seitenwand kegelmantelförmig nach radial außen, insbesondere verläuft sie mit einem Kegelwinkel von 0,5 bis 2° geneigt. Auf diese Weise wird das Einführen eines Kugelkopfes in den dafür vorgesehenen Bereich der Lagerschale erleichtert.

Zudem wird durch die kegelmantelförmige Gestaltung der Innenmantelfläche und der Außenmantelfläche eine Verformbarkeit des Endbereichs vergrößert. Auf diese Weise kann der Endbereich im Zuge einer Montage der Lagerschale in einem Gelenkgehäuse einfacher in die Form eines Kugelschalenabschnitts gebracht werden, um eine flächige Anlage für einen Kugelkopf bereitzustellen.

Dabei kann ein Kegelwinkel der Innenmantelfläche kleiner sein als ein Kegelwinkel der Außenmantelfläche. Auf diese Weise wird die Montage der Lagerschale sowie des zugeordneten Kugelkopfes entsprechend der obigen Erläuterungen erleichtert. Gleichzeitig wird die strukturelle Stabilität der Lagerschale beibehalten.

Zudem wird die Aufgabe durch ein Kugelgelenk der eingangs genannten Art mit einer erfindungsgemäßen Lagerschale gelöst, wobei ein Kugelkopf eines Kugelzapfens innerhalb der Seitenwand positioniert ist und an die Stirnwand anlegbar ist, wobei die Lagerschale in einem Gelenkgehäuse angeordnet ist und wobei das Gelenkgehäuse kugelkopfseitig durch einen Gehäusedeckel verschlossen ist. Dabei kann der Gehäusedeckel am Bund der Lagerschale anliegen. Auf diese Weise ergibt sich ein einfach aufgebautes Kugelgelenk mit hoher Lebensdauer.

In einer Alternative ist in Axialrichtung dem Gehäusedeckel und der Stirnwand ein Elastomerelement zwischengeschaltet, insbesondere wobei das Elastomerelement vorgespannt ist. Es ergibt sich somit eine Federreihenschaltung zwischen Stirnwand und Elastomerelement. Mit Bezug auf den Bund ist das Elastomerelement parallelgeschaltet. Das Elastomerelement kann dabei beispielsweise als Gummielement, insbesondere Gummiring ausgeführt sein. Auf diese Weise lässt sich eine zuverlässige Verschleißnachstellung realisieren.

Dabei kann die Stirnwand der Lagerschale durch elastische Verformung des Elastomerelements vorgespannt sein. Auch auf diese Weise wird eine zuverlässige Verschleißnachstellung gewährleistet.

Das Elastomerelement kann ferner in Radialrichtung zwischen der Seitenwand und dem Bund und/oder zwischen der Seitenwand, insbesondere der Wandverdickung, und der Stirnwand angeordnet ist. Das Elastomerelement ist somit in einem Raum angeordnet, der durch die Seitenwand, die Stirnwand und dem Bund definiert ist. Auf diese Weise kann es platzsparend angeordnet werden.

Die Erfindung wird nachstehend anhand eines Ausführungsbeispiels erläutert, das in den beigefügten Zeichnungen gezeigt ist. Es zeigen:
- Figur 1 ein erfindungsgemäßes Kugelgelenk gemäß einer ersten Ausführungsform mit einer erfindungsgemäßen Lagerschale gemäß einer ersten Ausführungsform in einer schematischen Schnittdarstellung,
- Figur 2 die Lagerschale aus Figur 1 in einer perspektivischen Ansicht,
- Figur 3 die Lagerschale aus Figur 2 in einer Draufsicht,
- Figur 4 eine der Figur 1 entsprechende Schnittdarstellung der Lagerschale,
- Figur 5 ein Detail V der Lagerschale aus Figur 4,
- Figur 6 ein Detail VI der Lagerschale aus Figur 4,
- Figur 7 ein erfindungsgemäßes Kugelgelenk gemäß einer zweiten Ausführungsform mit einer erfindungsgemäßen Lagerschale gemäß einer zweiten Ausführungsform in einer schematischen Schnittdarstellung,
- Figur 8 die Lagerschale aus Figur 7 in einer perspektivischen Darstellung und
- Figur 9 die Lagerschale aus Figur 8 in einer Schnittdarstellung.

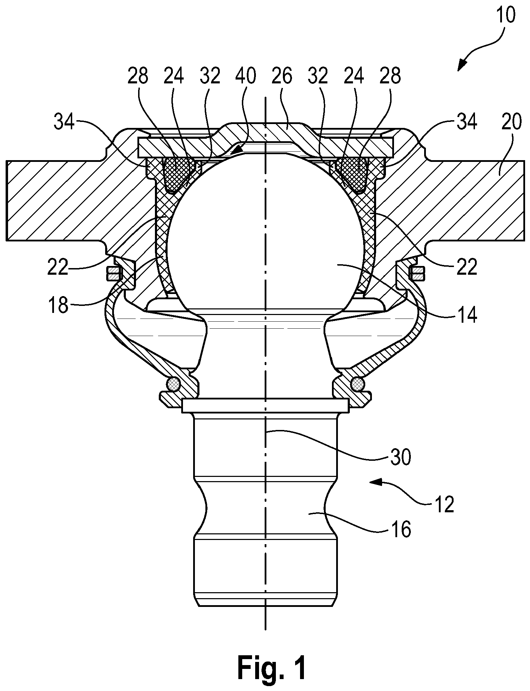

Figur 1 zeigt ein Kugelgelenk 10, das einen Kugelzapfen 12 mit einem Kugelkopf 14 und einem Schaft 16 umfasst.

Der Kugelkopf 14 ist dabei in einer Lagerschale 18 gelagert, die in einem Gelenkgehäuse 20 angeordnet ist.

Genauer gesagt ist der Kugelkopf 14 innerhalb einer Seitenwand 22 der Lagerschale 18 positioniert und liegt an einer Stirnwand 24 derselben an.

Das Gelenkgehäuse 20 ist ferner kugelkopfseitig durch einen Gehäusedeckel 26 verschlossen.

Zusätzlich ist ein Elastomerelement 28 vorgesehen, das in Axialrichtung, d.h. entlang einer Längsachse 30 des Kugelzapfens 12 und der Lagerschale 18, dem Gehäusedeckel 26 und der Stirnwand 24 zwischengeschaltet ist.

In Radialrichtung liegt das Elastomerelement 28 zwischen der Seitenwand 22 und der Stirnwand 24 sowie zwischen der Seitenwand 22 und einem Bund 32 der Lagerschale 18.

Das Kugelgelenk 10 ist als sogenanntes Radialkugelgelenk ausgeführt.

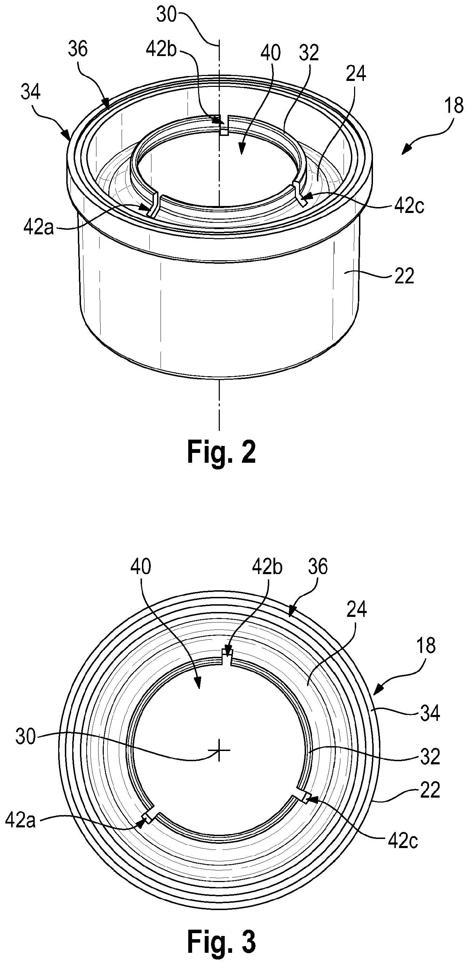

In den Figuren 2 bis 6 ist die Lagerschale 18 im Detail gezeigt.

In diesen Figuren ist die Lagerschale 18 in einem unmontierten Zustand dargestellt. Aus diesem Grund verläuft der der Stirnwand 24 abgewandte Endbereich der Seitenwand 22 im Wesentlichen entlang der Längsachse 30. Dieser Endbereich wird erst im Zuge der Montage der Lagerschale 18 im Gelenkgehäuse 20 nach radial innen umgeformt, um an einer Kontur des Kugelkopfes 14 anliegen zu können (vgl. Figur 1).

Die Lagerschale 18 ist einstückig aus einem elastischen Kunststoffmaterial hergestellt.

Die Seitenwand 22 der Lagerschale 18 verläuft dabei im Wesentlichen entlang der Längsachse 30 und ist im nicht montierten Zustand kreiszylindermantelförmig.

In demjenigen axialen Endbereich der Seitenwand 22, in dem die Stirnwand 24 vorgesehen ist, weist sie eine Wandverdickung 34 auf, die am Umfang der Seitenwand 22 vollständig umläuft. Diese Wandverdickung 34 dient als Positionierungshilfe innerhalb des Gelenkgehäuses 20.

Im selben axialen Endbereich der Seitenwand 22 ist zudem an der axialen Stirnseite eine umfangsmäßig umlaufende Nut 36 vorgesehen (siehe Figur 2). Diese dient dem Toleranzausgleich.

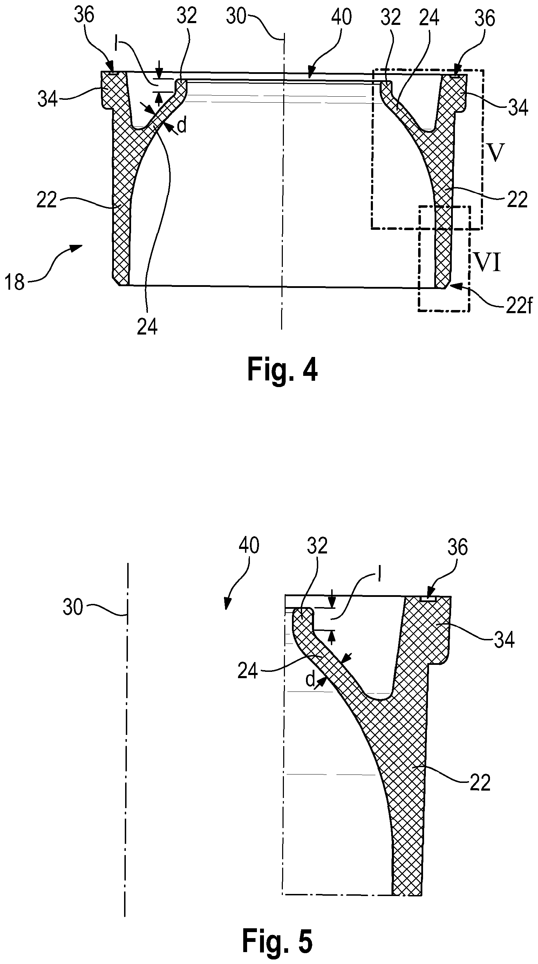

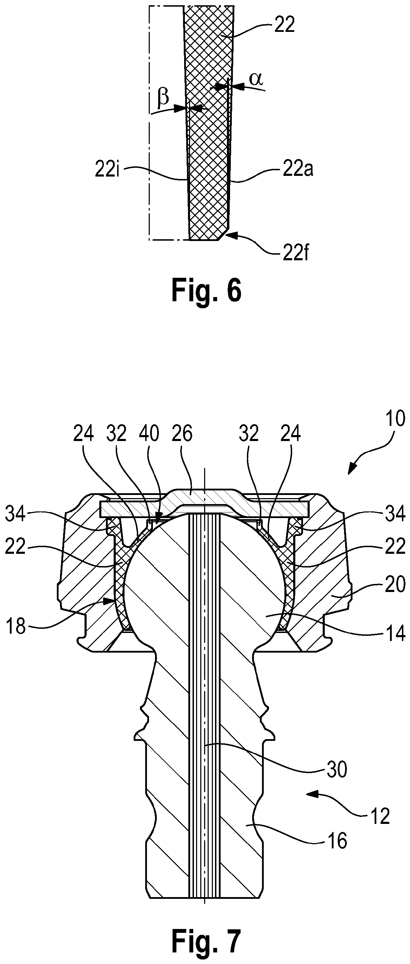

Im entgegengesetzten axialen Endbereich, also in demjenigen Endbereich der Seitenwand 22, der der Stirnwand 24 abgewandt ist, ist eine Außenmantelfläche 22a der Seitenwand 22 kegelmantelförmig gestaltet und ist in diesem Zusammenhang mit einem Kegelwinkel α von ca. 1,5° nach radial innen geneigt (siehe Figuren 4 und 6).

Am selben axialen Ende der Seitenwand 22 ist eine Innenmantelfläche 22i ebenfalls kegelmantelförmig gestaltet und ist mit einem Kegelwinkel β von ca. 1° nach radial außen geneigt.

Der Kegelwinkel β der Innenmantelfläche 22i ist also kleiner als der Kegelwinkel α der Außenmantelfläche 22a.

Eine derartige Ausführung der Seitenwand 22 erleichtert die Montage der Lagerschale 18 im Gelenkgehäuse 20 sowie eine Montage des Kugelkopfes 14 in der Lagerschale 18.

Zum selben Zweck ist das axiale Ende der Seitenwand 22 auch radial außen mit einer Fase 22f versehen. Es ist also angefast (vgl. Figuren 4 und 6).

Damit der Kugelkopf 14 innerhalb der Lagerschale 18 möglichst flächig anliegt, ist die Stirnwand 24 kugelschalenabschnittsförmig gestaltet.

Dabei ist in einem Scheitelbereich der Stirnwand 24 eine Öffnung 40 vorgesehen.

An einem Rand der Öffnung ist dabei ein im Wesentlichen in Axialrichtung nach außen abstehender Bund 32 angeformt. Dieser ist direkt am Rand der Öffnung 40 vorgesehen.

Im dargestellten Ausführungsbeispiel ist eine axiale Länge I des gegenüber der Stirnwand 24 in Axialrichtung vorstehenden Bereichs des Bundes 32 ungefähr gleich groß wie eine Wandstärke d der Stirnwand 24. Mit anderen Worten beträgt die Länge I 100 % der Wandstärke d der Stirnwand 24.

Außerdem ist der Bund 32 gegenüber dem zugeordneten axialen Ende der Seitenwand 22 in Axialrichtung zurückversetzt (siehe insbesondere Figur 1).

Sowohl der Bund 32 als auch die Stirnwand 24 sind im dargestellten Beispiel als elastisch verformbare Federn ausgebildet.

Dies wird einerseits durch das bereits erwähnte elastische Kunststoffmaterial erreicht und andererseits durch drei Schlitze 42a, 42b, 42c, die im Wesentlichen in Axialrichtung den Bund 32 durchlaufen und sich bis in die Stirnwand 24 erstrecken.

Die Schlitze 42a, 42b, 42c sind am Umfang des Bundes 32 gleichverteilt. Sie haben also einen Winkelabstand von ca. 120°.

Es ergibt sich somit die Möglichkeit, im montierten Zustand des Kugelgelenks 10 die Lagerschale 18 mittels des Elastomerelements 28 elastisch vorzuspannen.

Im dargestellten Ausführungsbeispiel ist dabei die durch den Bund 32 gebildete Feder und die durch die Stirnwand 24 gebildete Feder in Reihe geschaltet.

Gleiches gilt für die durch das Elastomerelement 28 gebildete Feder und die durch die Stirnwand 24 gebildete Feder.

Die beiden vorgenannten Reihenschaltungen von Federn sind einander parallel geschaltet.

Eine solche Vorspannung bewirkt, dass der Kugelkopf 14 stets spielfrei in der Lagerschale 18 und damit innerhalb des Gelenkgehäuses 20 gehalten ist.

Eine zweite Ausführungsform des Kugelgelenks 10 ist in Figur 7 gezeigt. Diese unterscheidet sich lediglich in zwei Aspekten von der ersten Ausführungsform.

Zum einen kommt das Kugelgelenk 10 gemäß der zweiten Ausführungsform ohne ein Elastomerelement aus.

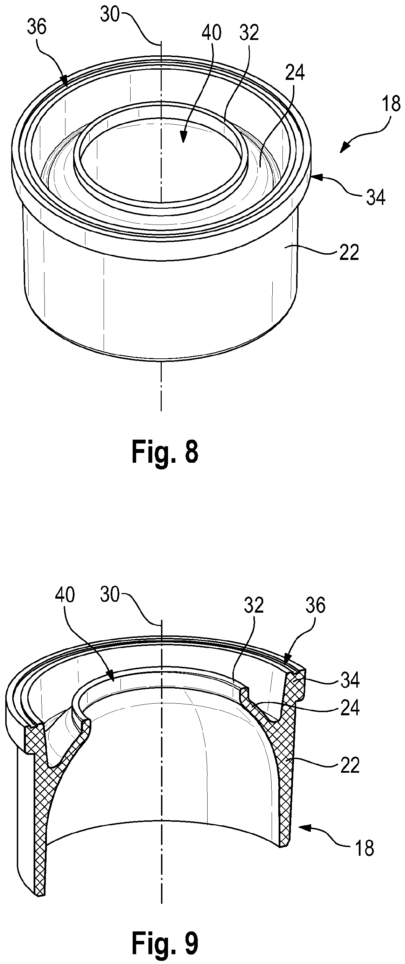

Zum anderen wird eine gegenüber der ersten Ausführungsform modifizierte Lagerschale 18 verwendet, die keine Schlitze aufweist (siehe Figuren 8 und 9).

Im Übrigen kann auf die Erläuterungen zur ersten Ausführungsform verwiesen werden.

Es versteht sich, dass die erste Ausführungsform und die zweite Ausführungsform auch kombiniert werden können.

In diesem Zusammenhang kann beispielsweise die Lagerschale 18 der zweiten Ausführungsform, die ohne Schlitze ausgeführt ist, mit einem Elastomerelement 28 zusammenwirken.

Alternativ kann auch die Lagerschale 18 der ersten Ausführungsform, die Schlitze aufweist, ohne Elastomerelement 28 verwendet werden.

## Patentansprüche

1. Lagerschale (18) für ein Kugelgelenk (10), mit einer im Wesentlichen kreiszylindermantelförmigen Seitenwand (22), die entlang einer Längsachse (30) verläuft, und einer in einem axialen Endbereich der Seitenwand (22) innerhalb der Seitenwand (22) angeordneten kugelschalenabschnittsförmigen Stirnwand (24), wobei in einem axialen Scheitelbereich der Stirnwand (24) eine Öffnung (40) vorgesehen ist, wobei am Rand der Öffnung (40) ein im Wesentlichen in Axialrichtung nach außen abstehender Bund (32) angeformt ist, wobei die Stirnwand (24) und/oder der Bund (32) als elastisch verformbare Feder ausgebildet ist bzw. sind, **dadurch gekennzeichnet, dass** die Seitenwand (22) in demjenigen axialen Endbereich, in dem die Stirnwand (24) vorgesehen ist, an ihrer axialen Stirnseite eine umfangsmäßig umlaufende Nut (36) aufweist.

2. Lagerschale (18) nach Anspruch 1, **dadurch gekennzeichnet, dass** ein axiales Ende des Bundes (32) gegenüber einem zugeordneten axialen Ende der Seitenwand (22) in Axialrichtung zurückversetzt ist.

3. Lagerschale (18) nach Anspruch 1 oder 2, **dadurch gekennzeichnet, dass** die Seitenwand (22) in demjenigen axialen Endbereich, in dem die Stirnwand (24) vorgesehen ist, eine Wandverdickung (34) aufweist, insbesondere wobei die Wandverdickung (34) am Umfang der Seitenwand (22) vollständig umläuft.

4. Lagerschale (18) nach einem der vorhergehenden Ansprüche, **dadurch gekennzeichnet, dass** eine axiale Länge (I) eines gegenüber der Stirnwand (24) in Axialrichtung vorstehenden Bereichs des Bundes (32) mindestens 50% einer Wandstärke (d) der Stirnwand (24) beträgt, insbesondere mindestens 80% einer Wandstärke (d) der Stirnwand (24) beträgt, vorzugsweise mindestens 100% einer Wandstärke (d) der Stirnwand (24) beträgt.

5. Lagerschale (18) nach einem der vorhergehenden Ansprüche, **dadurch gekennzeichnet, dass** die Lagerschale (18) aus einem Kunststoffmaterial hergestellt ist, insbesondere aus einem elastischen Kunststoffmaterial hergestellt ist.

6. Lagerschale (18) nach einem der vorhergehenden Ansprüche, **dadurch gekennzeichnet, dass** die Lagerschale (18) einstückig ist.

7. Lagerschale (18) nach einem der vorhergehenden Ansprüche, **dadurch gekennzeichnet, dass** der Bund (32) zumindest einen im Wesentlichen in Axialrichtung verlaufenden Schlitz (42a, 42b, 42c) aufweist.

8. Lagerschale (18) nach Anspruch 7, **dadurch gekennzeichnet, dass** der Schlitz (42a, 42b, 42c) den Bund (32) in Axialrichtung durchläuft und sich bis in die Stirnwand (24) erstreckt.

9. Lagerschale (18) nach einem der vorhergehenden Ansprüche, **dadurch gekennzeichnet, dass** ein der Stirnwand (24) abgewandtes axiales Ende der Seitenwand (22) radial außen angefast ist.

10. Lagerschale (18) nach einem der vorhergehenden Ansprüche, **dadurch gekennzeichnet, dass** eine Außenmantelfläche (22a) eines der Stirnwand (24) abgewandten axialen Endbereichs der Seitenwand (22) kegelmantelförmig nach radial innen verläuft, insbesondere mit einem Kegelwinkel (α) von 0,5 bis 2° geneigt verläuft.

11. Lagerschale (18) nach einem der vorhergehenden Ansprüche, **dadurch gekennzeichnet, dass** eine Innenmantelfläche (22i) eines der Stirnwand (24) abgewandten axialen Endbereichs der Seitenwand (22) kegelmantelförmig nach radial außen verläuft, insbesondere mit einem Kegelwinkel (β) von 0,5 bis 2° geneigt verläuft.

12. Lagerschale (18) nach Anspruch 10 und 11, **dadurch gekennzeichnet, dass** ein Kegelwinkel (β) der Innenmantelfläche (22i) kleiner ist als ein Kegelwinkel (α) der Außenmantelfläche (22a).

13. Kugelgelenk (10) mit einer Lagerschale (18) nach einem der vorhergehenden Ansprüche,
wobei ein Kugelkopf (14) eines Kugelzapfens (12) innerhalb der Seitenwand (22) positioniert ist und an die Stirnwand (24) anlegbar ist,
wobei die Lagerschale (18) in einem Gelenkgehäuse (20) angeordnet ist und
wobei das Gelenkgehäuse (20) kugelkopfseitig durch einen Gehäusedeckel (26) verschlossen ist.

14. Kugelgelenk (10) nach Anspruch 13, **dadurch gekennzeichnet, dass** in Axialrichtung dem Gehäusedeckel (26) und der Stirnwand (24) ein Elastomerelement (28) zwischengeschaltet ist, insbesondere wobei das Elastomerelement (28) vorgespannt ist.

15. Kugelgelenk (10) nach Anspruch 14, **dadurch gekennzeichnet, dass** die Stirnwand (24) der Lagerschale (18) durch elastische Verformung des Elastomerelements (28) vorgespannt ist.

16. Kugelgelenk (10) nach Anspruch 14 oder 15, **dadurch gekennzeichnet, dass** das Elastomerelement (28) in Radialrichtung zwischen der Seitenwand (22) und dem Bund (32) und/oder zwischen der Seitenwand (22), insbesondere der Wandverdickung (34), und der Stirnwand (24) angeordnet ist.

## Claims

1. A bearing shell (18) for a ball joint (10), including a side wall (22) which has substantially the shape of a circular-cylindrical envelope and runs along a longitudinal axis (30), and a front wall (24) which has the shape of a ball socket portion and is arranged in an axial end region of the side wall (22) within the side wall (22), wherein an opening (40) is provided in an axial apex region of the front wall (24), wherein a collar (32) projecting outwards substantially in the axial direction is integrally formed on the edge of the opening (40), wherein the front wall (24) and/or the collar (32) are/is configured as an elastically deformable spring, **characterized in that** the side wall (22) has a circumferentially encircling groove (36) on its axial front side **in that** axial end region in which the front wall (24) is provided.

2. The bearing shell (18) according to claim 1, **characterized in that** an axial end of the collar (32) is offset rearwards in the axial direction with respect to an associated axial end of the side wall (22).

3. The bearing shell (18) according to claim 1 or 2, **characterized in that** the side wall (22) has a wall thickening (34) **in that** axial end region in which the front wall (24) is provided, in particular wherein the wall thickening (34) runs completely around the circumference of the side wall (22).

4. The bearing shell (18) according to any of the preceding claims, **characterized in that** an axial length (I) of a region of the collar (32) projecting in the axial direction with respect to the front wall (24) is at least 50% of a wall thickness (d) of the front wall (24), in particular at least 80% of a wall thickness (d) of the front wall (24), preferably at least 100% of a wall thickness (d) of the front wall (24).

5. The bearing shell (18) according to any of the preceding claims, **characterized in that** the bearing shell (18) is made of a plastic material, in particular is made of an elastic plastic material.

6. The bearing shell (18) according to any of the preceding claims, **characterized in that** the bearing shell (18) is made in one piece.

7. The bearing shell (18) according to any of the preceding claims, **characterized in that** the collar (32) has at least one slot (42a, 42b, 42c) running substantially in the axial direction.

8. The bearing shell (18) according to claim 7, **characterized in that** the slot (42a, 42b, 42c) passes through the collar (32) in the axial direction and extends into the front wall (24).

9. The bearing shell (18) according to any of the preceding claims, **characterized in that** an axial end of the side wall (22) facing away from the front wall (24) is chamfered radially on the outside.

10. The bearing shell (18) according to any of the preceding claims, **characterized in that** an outer envelope surface (22a) of an axial end region of the side wall (22) facing away from the front wall (24) extends radially inwards in in the shape of a cone envelope, in particular inclined at a cone angle (α) of 0.5 to 2°.

11. The bearing shell (18) according to any of the preceding claims, **characterized in that** an inner envelope surface (22i) of an axial end region of the side wall (22) facing away from the front wall (24) extends radially outwards in the shape of a cone envelope, in particular inclined at a cone angle (β) of 0.5 to 2°.

12. The bearing shell (18) according to claims 10 and 11, **characterized in that** a cone angle (β) of the inner envelope surface (22i) is smaller than a cone angle (α) of the outer envelope surface (22a).

13. A ball joint (10) having a bearing shell (18) according to any of the preceding claims,
wherein a ball head (14) of a ball stud (12) is positioned within the side wall (22) and is adapted to rest against the front wall (24),
wherein the bearing shell (18) is arranged in a joint housing (20), and
wherein the joint housing (20) is closed on the ball head side by a housing cover (26).

14. The ball joint (10) according to claim 13, **characterized in that** an elastomer element (28) is interposed in the axial direction between the housing cover (26) and the front wall (24), in particular wherein the elastomer element (28) is prestressed.

15. The ball joint (10) according to claim 14, **characterized in that** the front wall (24) of the bearing shell (18) is prestressed by elastic deformation of the elastomer element (28).

16. The ball joint (10) according to claim 14 or 15, **characterized in that** the elastomer element (28) is arranged in the radial direction between the side wall (22) and the collar (32) and/or between the side wall (22), in particular the wall thickening (34), and the front wall (24).

## Revendications

1. Coquille de coussinet (18) pour joint sphérique (10), comprenant une paroi latérale (22) sensiblement en forme d'enveloppe cylindrique circulaire qui s'étend le long d'un axe longitudinal (30), et une paroi frontale (24) en forme de tronçon de coussinet sphérique qui est agencée dans une zone d'extrémité axiale de la paroi latérale (22) à l'intérieur de la paroi latérale (22), une ouverture (40) étant prévue dans une zone de sommet axiale de la paroi frontale (24), un collet (32) qui fait saillie vers l'extérieur sensiblement dans le sens axial étant moulé sur le bord de l'ouverture (40), la paroi frontale (24) et/ou le collet (32) étant réalisé(e)/réalisés sous forme de ressort élastiquement déformable, **caractérisée en ce que** la paroi latérale (22) présente, dans la zone d'extrémité axiale dans laquelle est prévue la paroi frontale (24), une rainure (36) circonférentiellement périphérique sur son côté frontal axial.

2. Coquille de coussinet (18) selon la revendication 1, **caractérisée en ce qu'**une extrémité axiale du collet (32) est en retrait vers l'arrière dans le sens axial par rapport à une extrémité axiale associée de la paroi latérale (22).

3. Coquille de coussinet (18) selon la revendication 1 ou 2, **caractérisée en ce que** la paroi latérale (22) présente un épaississement de paroi (34) dans la zone d'extrémité axiale dans laquelle la paroi frontale (24) est prévue, l'épaississement de paroi (34) s'étendant en particulier entièrement sur le pourtour de la paroi latérale (22).

4. Coquille de coussinet (18) selon l'une des revendications précédentes, **caractérisée en ce qu'**une longueur axiale (I) d'une zone du collet (32) faisant saillie dans le sens axial par rapport à la paroi frontale (24) représente au moins 50% d'une épaisseur de paroi (d) de la paroi frontale (24), en particulier au moins 80% d'une épaisseur de paroi (d) de la paroi frontale (24), de préférence au moins 100% d'une épaisseur de paroi (d) de la paroi frontale (24).

5. Coquille de coussinet (18) selon l'une des revendications précédentes, **caractérisée en ce que** la coquille de coussinet (18) est réalisée en un matériau plastique, en particulier en un matériau plastique élastique.

6. Coquille de coussinet (18) selon l'une des revendications précédentes, **caractérisée en ce que** la coquille de coussinet (18) est réalisée en une seule pièce.

7. Coquille de coussinet (18) selon l'une des revendications précédentes, **caractérisée en ce que** le collet (32) présente au moins une fente (42a, 42b, 42c) qui s'étend sensiblement dans le sens axial.

8. Coquille de coussinet (18) selon la revendication 7, **caractérisée en ce que** la fente (42a, 42b, 42c) traverse le collet (32) dans le sens axial et s'étend jusque dans la paroi frontale (24).

9. Coquille de coussinet (18) selon l'une des revendications précédentes, **caractérisée en ce qu'**une extrémité axiale de la paroi latérale (22), détournée de la paroi frontale (24) est chanfreinée radialement à l'extérieur.

10. Coquille de coussinet (18) selon l'une des revendications précédentes, **caractérisée en ce qu'**une surface d'enveloppe extérieure (22a) d'une zone d'extrémité axiale de la paroi latérale (22), détournée de la paroi frontale (24) s'étend en forme d'enveloppe conique radialement vers l'intérieur, s'étend en particulier de manière inclinée avec un angle de cône (α) de 0,5 à 2°.

11. Coquille de coussinet (18) selon l'une des revendications précédentes, **caractérisée en ce qu'**une surface d'enveloppe intérieure (22i) d'une zone d'extrémité axiale de la paroi latérale (22), détournée de la paroi frontale (24) s'étend en forme d'enveloppe conique radialement vers l'extérieur, s'étend en particulier de manière inclinée avec un angle de cône (β) de 0,5 à 2°.

12. Coquille de coussinet (18) selon les revendications 10 et 11, **caractérisée en ce qu'**un angle de cône (β) de la surface d'enveloppe intérieure (22i) est inférieur à un angle de cône (α) de la surface d'enveloppe extérieure (22a).

13. Joint sphérique (10) comprenant une coquille de coussinet (18) selon l'une des revendications précédentes,
une tête sphérique (14) d'un pivot sphérique (12) étant positionnée à l'intérieur de la paroi latérale (22) et étant apte à être appliquée contre la paroi frontale (24),
la coquille de coussinet (18) étant agencée dans un boîtier de joint (20), et
le boîtier de joint (20) étant fermé du côté de la tête sphérique par un couvercle de boîtier (26).

14. Joint sphérique (10) selon la revendication 13, **caractérisé en ce qu'**un élément en élastomère (28) est intercalé dans le sens axial entre le couvercle de boîtier (26) et la paroi frontale (24), l'élément en élastomère (28) étant en particulier précontraint.

15. Joint sphérique (10) selon la revendication 14, **caractérisé en ce que** la paroi frontale (24) de la coquille de coussinet (18) est précontrainte par déformation élastique de l'élément en élastomère (28).

16. Joint sphérique (10) selon la revendication 14 ou 15, **caractérisé en ce que** l'élément en élastomère (28) est agencé dans le sens radial entre la paroi latérale (22) et le collet (32) et/ou entre la paroi latérale (22), en particulier l'épaississement de paroi (34), et la paroi frontale (24).
